# EUROPEAN PATENT SPECIFICATION

(11) **EP 3 287 206 B1**
(45) Date of publication and mention of the grant of the patent: **16.08.2023**
(21) Application number: 16782827.6
(22) Date of filing: 18.01.2016
(51) Int. Cl.: B22F 3/11, C21C 5/52, C21C 7/00, B22F 7/00, C22C 1/08, B21D 39/03, B22F 7/02, B22F 7/06, H01M 8/02, B32B 15/04, H01M 4/66, H01M 4/80, B32B 15/02, H01M 8/0232, H01M 8/0245, C22C 1/04

(54) **COMPOSITE MATERIAL AND METHOD FOR PRODUCING SAME**
VERBUNDMATERIAL UND VERFAHREN ZUR HERSTELLUNG DAVON
MATÉRIAU COMPOSITE ET PROCÉDÉ POUR SA PRODUCTION

(30) Priority: 24.04.2015 JP 2015089030
(43) Date of publication of application: 28.02.2018
(73) Proprietor: Sumitomo Electric Industries, Ltd., Osaka-shi, Osaka 541-0041 (JP)
(72) Inventor: HIRAIWA, Chihiro, Itami-shi, Hyogo 664-0016 (JP); MAJIMA, Masatoshi, Itami-shi, Hyogo 664-0016 (JP); TAWARAYAMA, Hiromasa, Itami-shi, Hyogo 664-0016 (JP); MIZUHARA, Naho, Itami-shi, Hyogo 664-0016 (JP); OKUNO, Kazuki, Itami-shi, Hyogo 664-0016 (JP); HIGASHINO, Takahiro, Itami-shi, Hyogo 664-0016 (JP); NODA, Yohei, Itami-shi, Hyogo 664-0016 (JP); MIYAMOTO, Kazunari, Osaka-shi, Osaka 554-0024 (JP)
(74) Representative: Boult Wade Tennant LLP
(86) International application number: PCT/JP2016/051227
(87) International publication number: WO 2016/170805

(56) References cited:
- WO-A1-95/11752
- WO-A1-2007/076650
- WO-A1-2012/063906
- JP-A- H0 225 228
- JP-A- H06 269 851
- JP-A- H06 269 851
- JP-A- 2004 189 563
- US-A1- 2010 028 710
- US-A1- 2010 143 808
- US-A1- 2012 328 957
- US-A1- 2013 230 734
- US-A1- 2013 231 754
- US-A1- 2013 288 123
- US-B1- 6 465 133

## Description

### Technical Field

The present invention relates to a composite material, in which porous metal bodies are bonded to each other, and a method for producing the composite material.

### Background Art

In recent years, porous metal bodies have attracted attention in the trend toward weight reduction of electronic equipment, automobiles, and the like. In the case where a metal material has a porous structure, a very high degree of lightness can be realized. In addition, the porous metal body has a large specific surface area and has excellent air-permeability and conductivity and, therefore, is expected to be used as a heat exchange material, a heat insulating material, a sound absorbing material, an impact absorbing material, a carrier of various chemical substances (catalyst and the like), a filter material, an electrode and a current collector of various cells, a gas channel of a fuel cell, an adsorbing material, an electromagnetic shielding material, and the like.

Examples of methods for producing the porous metal body include a method in which a foaming agent is added to a molten metal, agitation is performed and, thereafter, cooling is performed (precursor method) and a method in which a metal powder and a powder called a spacer are mixed and sintered and, thereafter, the spacer is removed (spacer method, for example, PTL 1).

The functionality of the porous metal body has attracted attention and a plurality of porous metal bodies having different functions have been stacked and integrated such that the resulting porous metal body has become multifunctional. Regarding the method for stacking a plurality of porous metal bodies, methods that are used include a method in which porous metal bodies are produced and, thereafter, these are bonded by an adhesive and a method in which integration is performed by sintering. Regarding the latter method, methods that are used include a method in which one of the porous metal bodies is produced by sintering, a paste containing another metal powder is stacked on the surface of the porous metal body and, thereafter, sintering is performed again and a method in which a forming die is filled with metal powders and the like in layers and, thereafter, sintering is performed (for example, PTL 2). US 2013/230734A relates to a porous implant material. US 2013/231754A1 also relates to a porous implant material. JPH06269851A relates to a porous metallic composite and its production. US 2012/0328957A1 relates to a three-dimensional network aluminum porous body, electrode using the aluminum porous body, and nonaqueous electrolyte battery, capacitor and lithium-ion capacitor with nonaqueous electrolytic solution, each using the electrode.

### Citation List

### Patent Literature

PTL 1: Japanese Unexamined Patent Application Publication No. 2013-82965
PTL 2: Japanese Unexamined Patent Application Publication No. 2005-29435

### Summary of Invention

### Technical Problem

Regarding the method in which a plurality of porous metal bodies are stacked by using an adhesive, the air-permeability is easily impaired at an interface between the porous metal bodies. Also, there is a concern that the functionality of the porous metal body may be impaired and an inconvenience may occur in use at high temperatures because of intervention of substances other than the porous metal body.
Regarding the method in which a plurality of porous metal bodies are integrated by sintering, it is very difficult to control the pore size and the porosity of each of the porous metal bodies.

### Solution to Problem

An aspect of the present invention relates to a composite material is according to claim 1.

Another aspect of the present invention relates to a method for producing a composite material is according to claim 4.

### Advantageous Effects of Invention

According to the present invention, a composite material, in which a plurality of porous metal bodies are bonded to each other, can be provided without impairing the function of each of the plurality of porous metal bodies. Also, a method, in which a composite material produced by combining a plurality of porous metal bodies is very simply obtained, can be provided.

### Brief Description of Drawings

[Fig. 1] Figure 1 is a sectional view schematically showing a composite material according to an embodiment of the present invention.
[Fig. 2] Figure 2 is a schematic diagram showing an example of the structure of part of a skeleton of a porous metal body.
[Fig. 3] Figure 3 is a sectional view schematically showing a cross section of part of the skeleton shown in Fig. 2.
[Fig. 4A] Figure 4A is a sectional view schematically showing a composite material according to another embodiment of the present invention.
[Fig. 4B] Figure 4B is a sectional view schematically showing a composite material according to another embodiment of the present invention.
[Fig. 4C] Figure 4C is a sectional view schematically showing a composite material according to another embodiment of the present invention.

### Description of Embodiments

### [Description of embodiment of invention]

Initially, the contents of an embodiment according to the present invention will be listed and described.
(1) A composite material according to the present invention is according to claim 1. Consequently, a plurality of porous metal bodies are bonded without impairing the function of each of the porous metal bodies.
(2) The porosity of the first porous metal body may be different from the porosity of the second porous metal body. Meanwhile, (3) the first porous metal body may contain a metal different from a metal contained in the second porous metal body. Consequently, the composite material can become multifunctional.
(4) In addition, a method for producing a composite material is according to claim 4. Consequently, a composite material, in which a plurality of porous metal bodies are combined, can be produced by a very simple method.

### [Details on embodiment of invention]

The embodiments according to the present invention will be specifically described below. In this regard, the present invention is not limited to the contents described below.

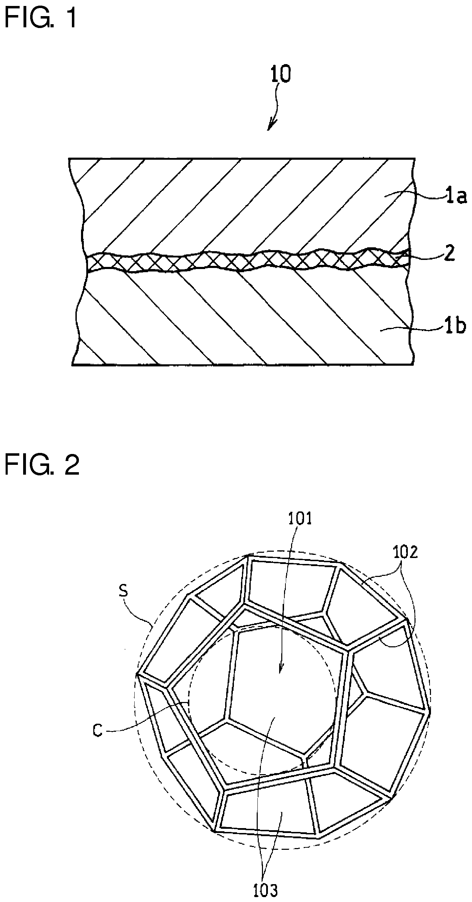

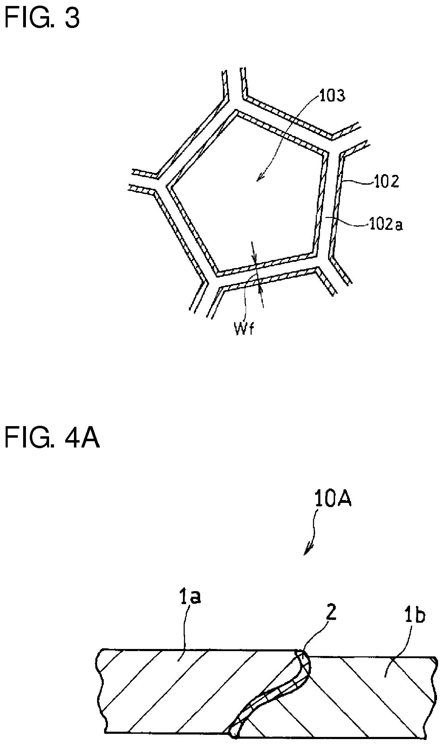

The composite material will be described below with reference to Figs. 1 to 3. Figure 1 is a sectional view schematically showing an embodiment of the composite material. Figure 2 is a schematic diagram showing an example of the structure of part of a skeleton of a porous metal body. Figure 3 is a sectional view schematically showing a cross section of part of the skeleton.

### (Composite material)

A composite material 10 includes a first porous metal body 1a having a three-dimensional mesh-like skeleton 102 and a second porous metal body 1b having a three-dimensional mesh-like skeleton 102. The first porous metal body 1a is bonded to the second porous metal body 1b, and the skeletons thereof are entangled with each other in the bonding portion 2.
In other words, the skeletons of the first porous metal body 1a and the second porous metal body 1b are entangled with each other and, thereby, the first porous metal body 1a is bonded to the second porous metal body 1b.

The first porous metal body 1a and the second porous metal body 1b have a nonwoven fabric-like structure or a spongy structure. Such a structure has holes and a metal skeleton. For example, a porous metal body having the spongy structure is composed of a plurality of cells having a hole and a metal skeleton. As shown in Fig. 2, one of cells is expressed as a regular dodecahedron. A hole 101 is demarcated by a fibrous or rod-like metal portion (fiber portion 102), and a plurality of holes are threedimensionally connected to each other. The skeleton of the cell is formed by connection of the fiber portions 102. The cell includes substantially pentagonal openings (or windows) 103 surrounded by the fiber portions 102. The adjacent cells are communicated with each other by sharing one opening 103. That is, the skeleton of each porous metal body is formed by fiber portions 102 that form a mesh-like network while demarcating a plurality of holes 101 continued. The skeleton having such a structure is called a three-dimensional mesh-like skeleton.

As shown in Fig. 3, the fiber portions 102 may have a cavity 102a in the inside, that is, may be hollow. A porous metal body having a hollow skeleton is very lightweight while having a bulky three-dimensional structure.

The configurations of the first porous metal body 1a and the second porous metal body 1b may be the same or different from each other. The configuration of the porous metal body is determined in accordance with the type of the metal, the porosity, the thickness, and the like as described below. In the case where the configurations of the porous metal bodies are the same, a large (large-area or thick) composite material that is not easily produced from the viewpoint of equipment or cost can be obtained by connecting the two. Even in the case where the configurations of the porous metal bodies are the same, each of the porous metal bodies can have a function different from each other by the hole 101 of each of the porous metal bodies being filled with a substance different from each other. In the case where the configurations of the first porous metal body 1a and the second porous metal body 1b are different from each other, there is an advantage that the porous metal bodies can have functions, e.g., air-permeability, different from each other.

The holes 101 of the porous metal bodies may be filled with various substances, e.g., a catalyst, an adsorbing agent, an electrode active material, and an electrolyte. Consequently, the composite material 10 can be provided with various functions. The substances introduced into the holes 101 of the porous metal bodies may be the same or different from each other.

In the bonding portion 2 of the composite material, the skeletons of the first porous metal body 1a and the second porous metal body 1b are entangled with each other. Entanglement of skeletons with each other may refer to, for example, a state in which the vicinity of an end portion of the fiber portion 102 of the second porous metal body 1b has entered the opening 103 located in the vicinity of an end portion of the first porous metal body 1a. Also, entanglement of skeletons may be a state in which fiber portions 102 present in the vicinity of end portions of the porous metal bodies are plastically deformed and are engaged with each other. Consequently, the first porous metal body 1a and the second porous metal body are firmly bonded to each other in the vicinity of the respective principal surfaces without interposing an adhesive therebetween. As a result, the first porous metal body 1a and the second porous metal body 1b also communicate with each other. Such a composite material has excellent permeability of a fluid and, thereby, is suitable for, for example, carriers of various chemical substances, various filters, and gas channels of fuel cells.

The metal that constitutes each of the porous metal bodies may be appropriately selected in accordance with the application and the use environment. In the composite material, the porous metal bodies are bonded to each other by using the skeletons thereof. The metals constituting the first porous metal body 1a and the second porous metal body 1b may be the same or different from each other. The above-described metals include at least one of copper, a copper alloy (alloy of copper and, for example, Fe, Ni, Si, or Mn), nickel or a nickel alloy (alloy of nickel and, for example, tin, chromium, or tungsten), aluminum or an aluminum alloy (aluminum and, for example, Fe, Ni, Si, or Mn), and a stainless steel.

The porosity (percentage of voids) of the composite material 10 may be appropriately selected in accordance with the application. The porosity is 60 percent by volume or more, preferably 70 percent by volume or more, and further preferably 85 percent by volume or more. The porosity is 99 percent by volume or less. These lower limit values and upper limit values can be appropriately combined. The porosity can be determined by { 1 - (apparent specific gravity of porous metal body/true specific gravity of metal)} × 100.

The porosities of the porous metal bodies are not specifically limited and may be set such that the porosity of the entire composite material becomes, for example, within the above-described range. The first porous metal body 1a and the second porous metal body 1b communicate with each other in the bonding portion 2. Therefore, the porosity of the composite material 10 well reflects each of the porosities of the first porous metal body 1a and the second porous metal body 1b. In other words, if the porosities of the first porous metal body 1a and the second porous metal body 1b are known, the porosity of the composite material 10 can be easily controlled. Further, as described later, the porosity of the composite material 10 can be predicted from the thicknesses and the porosities of the porous metal bodies before bonding (precursors).

The porosities of the porous metal bodies are, for example, within the same range as the porosity of the composite material 10. The porosities of the porous metal bodies may be the same or different from each other. In the case where the porosities of the porous metal bodies are different from each other, the composite material 10 is particularly suitable for various filter materials and gas channels of fuel cells.

The average hole size V of the holes 101 of each of the porous metal bodies may be appropriately selected in accordance with the application. The average hole size V is 300 to 5,000 µm and may be 400 to 3,500 µm. The average hole sizes V of the holes 101 of the porous metal bodies may be the same or different from each other.

The average hole size V is determined as described below, for example. Initially, an arbitrary hole 101a is selected among holes 101 in a porous metal body. The diameter of a maximum sphere that is enclosed in the hole 101a and the diameter of a minimum sphere S that can enclose the hole 101a (refer to Fig. 2) are measured and the average value thereof is determined. This is assumed to be the hole size Va of the hole 101a. Likewise, the hole sizes Vb to Vj of a plurality of (for example, nine) other arbitrary holes 101b to 101j included in the porous metal body are determined, and the average value of the hole sizes Va to Vj of the 10 holes 101a to 101j is assumed to be the hole size V.

The average size (pore size D) of openings 103 of each of the porous metal bodies may be appropriately selected in accordance with the application. The pore sizes D of the porous metal bodies are 100 to 3,000 µm, or may be 200 to 2,000 µm. The pore sizes D of the porous metal bodies may be the same or different from each other.

The pore size D is determined as described below, for example. Initially, an arbitrary opening 103a is selected among openings 103 in a porous metal body. The diameter of a maximum perfect circle C (refer to Fig. 2) that is enclosed in the opening 103a and the diameter of a minimum perfect circle that can enclose the opening 103a are measured and the average value thereof is determined. This is assumed to be the pore size Da of the opening 103a. Likewise, the pore sizes Db to Dj of a plurality of (for example, nine) other arbitrary openings 103b to 103j included in the porous metal body are determined, and the average value of the pore sizes Da to Dj of the 10 openings 103a to 103j is assumed to be the pore size D. Specifically, in a SEM photograph of the principal surface of the porous metal body, a region R that includes at least 10 openings 103 entirely is determined. For example, 10 openings are selected at random among openings 103 included in the region R, and pore sizes Da to Dj of the openings 103a to 103j are calculated by the above-described method. The average value of the calculated pore sizes Da to Dj of the openings 103a to 103j is assumed to be the pore size D. In this regard, the average hole size V and the pore size D of each of the porous metal bodies can be predicted from the porous metal body before bonding (precursor).

The specific surface area (BET specific surface area) of the composite material 10 is not specifically limited and may be appropriately selected in accordance with the application. The specific surface area of the composite material 10 may be, for example, 100 to 9,000 m²/m³ or 200 to 6,000 m²/m³. The specific surface areas of the porous metal bodies are not specifically limited and may be set such that the specific surface area of the composite material becomes, for example, within the above-described range. The specific surface areas of the porous metal bodies may be the same or different from each other.

The widths Wf of the skeletons 102 of each of the porous metal bodies are not specifically limited. In particular, from the viewpoint of bonding strength, the average value of the width Wf is preferably 100 to 1,000 µm, and more preferably 100 to 500 µm. The widths Wf of the skeletons 102 of the porous metal bodies may be the same or different from each other.

The density (cell density) of openings 103 of each of the porous metal bodies may be appropriately selected in accordance with the application. The cell density of each of the porous metal bodies is 5 to 150 every 2.54 cm or may be 5 to 70 every 2.54 cm. The cell densities of the porous metal bodies may be the same or different from each other.

The thickness of the composite material 10 is not specifically limited and may be appropriately selected in accordance with the application. The thickness of the composite material 10 is, for example, 0.1 mm or more or may be 3 mm or more. Meanwhile, the thickness of the composite material 10 is, for example, 50 mm or less. The thickness of each of the porous metal bodies is not specifically limited and may be set such that the thickness of the composite material becomes, for example, within the above-described range. The thicknesses of the porous metal bodies may be the same or different from each other. The thickness of each of the porous metal bodies is, for example, 0.05 mm or more, may be 0.8 mm or more, or may be 1 mm or more. Meanwhile, the thickness of each of the porous metal bodies is, for example, less than 50 mm and may be 20 mm or less.

For example, in the case where the composite material 10 is used for a carrier of a catalyst, a plurality of porous metal bodies described below may be used. Examples of the first porous metal body 1a include a porous metal body having an average hole size of the holes 101 of 2,000 to 4,000 µm, a specific surface area of 400 to 600 m²/m³, a cell density of 6 to 10 every 2.54 cm, and a thickness of 5 to 10 mm. Examples of the second porous metal body 1b include a porous metal body having an average hole size of the holes 101 of 450 to 550 µm, a specific surface area of 6,500 to 8,500 m²/m³, a cell density of 48 to 52 every 2.54 cm, and a thickness of 5 to 10 mm. Consequently, the composite material 10 can be provided with a function suitable for a catalyst carrier.

The configuration of the composite material 10 is not limited to the configuration in which the entire surface of one principal surface of the first porous metal body 1a is bonded to the entire surface of one principal surface of the second porous metal body 1b, as shown in Fig. 1. For example, as shown in Fig. 4A, part of one principal surface of the first porous metal body 1a may be bonded to part of one principal surface of the second porous metal body 1b. In this case, the bonding portion 2 may be formed on an end surface of the first porous metal body 1a and an end surface of the second porous metal body 1b.

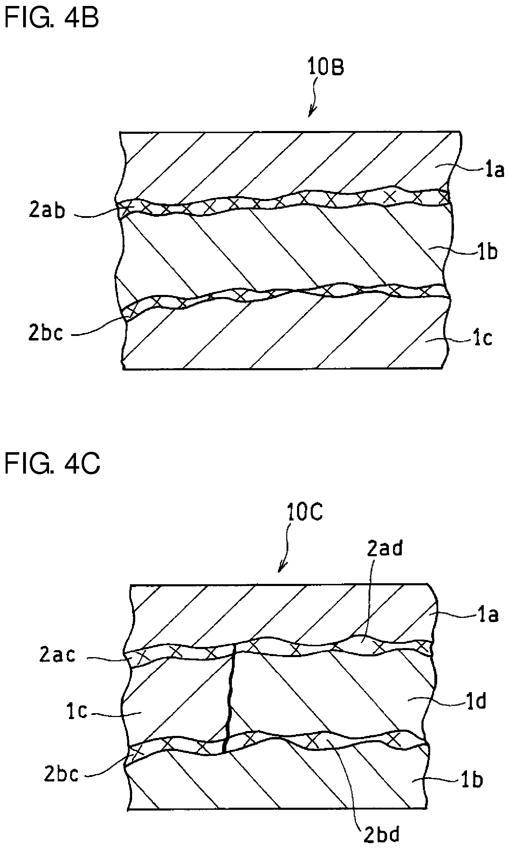

Alternatively, as shown in Fig. 4B, a composite material 10B may have a threelayer structure in which the entire surface of one principal surface of a third porous metal body 1c is further bonded to the entire surface of the other principal surface of the second porous metal body 1b. In this case, the bonding portions 2 may be formed between the first porous metal body 1a and the second porous metal body 1b (bonding portion 2ab) and between the second porous metal body 1b and the third porous metal body 1c (bonding portion 2bc). In addition, 4 layers or more of porous metal bodies may be bonded.

Further, as shown in Fig. 4C, in a composite material 10C, the entire surface of one principal surface of the first porous metal body 1a may be bonded to the entire surface of one principal surface of the second porous metal body 1b with a third porous metal body 1c and a fourth porous metal body 1d, which are arranged side by side, interposed therebetween. In this case, the bonding portions 2 may be formed between the first porous metal body 1a and the third porous metal body 1c (bonding portion 2ac), between the first porous metal body 1a and the fourth porous metal body 1d (bonding portion 2ad), between the second porous metal body 1b and the third porous metal body 1c (bonding portion 2bc), and between the second porous metal body 1b and the fourth porous metal body 1d (bonding portion 2bd). The configuration of the composite material 10 may be a combination of the above-described configurations.

### (Method for producing porous metal body)

Each of the porous metal bodies can be formed by, for example, covering a resin porous body with the above-described metal. Covering with the metal can be performed by plating treatment, a vapor phase method (evaporation, plasma chemical vapor deposition, sputtering, or the like), covering with a metal paste, or the like. A three-dimensional mesh-like skeleton is formed by the covering treatment with a metal. Among these covering methods, the plating treatment is preferable.

The plating treatment has to form a metal layer on the surface of a resin porous body (including a surface facing inner voids) and known plating methods, e.g., an electroplating method, and a molten salt plating method, can be adopted. A three-dimensional mesh-like porous metal body in accordance with the shape of the resin porous body is formed by the plating treatment. In this regard, in the case where the plating treatment is performed by electroplating, it is desirable that a conductive layer be formed before the electroplating is performed. The conductive layer may be formed on the surface of the resin porous body by conductive agent coating or the like other than electroless plating, evaporation, sputtering, and the like, or may be formed by dipping a resin porous body into a dispersion containing a conductive agent.

There is no particular limitation regarding the resin porous body as long as voids are included, and a resin foam, a resin nonwoven fabric, and the like can be used. In particular, a resin foam is preferable because communicating holes are easily formed. Regarding the resin that constitutes these porous bodies, after the metal covering treatment, preferably, the inside of the skeleton 102 can be made hollow by decomposition or dissolution while the shape of the three-dimensional mesh-like skeleton of the metal is maintained. Examples can include thermosetting resins, e.g., a thermosetting polyurethane and a melamine resin; and thermoplastic resins, e.g., an olefin resin (polyethylene, polypropylene, and the like) and a thermoplastic polyurethane. In particular, it is preferable that a thermosetting polyurethane and the like be used from the viewpoint of ease of formation of holes having more uniform sizes and shapes.

It is desirable that the resin in the skeleton be decomposed or dissolved by heat treatment or the like and, thereby, be removed. After the heat treatment, components (a resin, a decomposition product, an unreacted monomer, an additive contained in the resin, and the like) remaining in the skeleton may be removed by washing or the like. The resin may be removed by performing heat treatment while a voltage is appropriately applied, as necessary. In this regard, the heat treatment may be performed in the state, in which a porous body subjected to plating treatment is dipped in a molten salt plating bath, while a voltage is applied.
In the case where the inside resin is removed after the metal covering treatment, as described above, a cavity is formed inside the skeleton of the porous metal body and the skeleton becomes hollow. The thus produced porous metal body includes a skeleton having a three-dimensional mesh-like structure in accordance with the shape of the resin foam. Regarding the commercially available porous metal body, "Aluminum-Celmet" (registered trademark) and "Celmet" (registered trademark) of copper or nickel, produced by Sumitomo Electric Industries, Ltd., can be used.

### (Method for producing composite material)

The composite material 10 can be produced by a very simple method in which, for example, a plurality of porous metal bodies are stacked and, thereafter, pressing is performed. Specifically, the composite material 10 is produced by a method including a first step of preparing a precursor (first porous metal precursor P1a) of the first porous metal body 1a and a precursor (second porous metal precursor P1b) of the second porous metal body 1b, a second step of arranging the first porous metal precursor P1a and the second porous metal precursor P1b such that these at least overlap one another, and a third step of pressing an overlap portion between the first porous metal precursor P1a and the second porous metal precursor P1b.

### (First step)

In the first step, the first porous metal precursor P1a and the second porous metal precursor P1b are prepared. The first porous metal precursor P1a and the second porous metal precursor P1b are made into the first porous metal body 1a and the second porous metal body 1b, respectively, through the third step (pressing).

The skeletons of portions other than the overlap portion between the first porous metal precursor P1a and the second porous metal precursor P1b may be deformed by pressing. Therefore, the porosities, the pore sizes, and the average hole sizes of the first porous metal precursor P1a and the second porous metal precursor P1b may change between before and after the pressing. However, changes in the porosities, the pore sizes, and the average hole sizes due to the pressing can be predicted on the basis of an empirical rule. For example, each of the porosities, the pore sizes, and the average hole sizes of the first porous metal precursor P1a and the second porous metal precursor P1b may be reduced by 5% to 90% due to the pressing. That is, the porosities, the pore sizes, and the average hole sizes of the first porous metal precursor P1a and the second porous metal precursor P1b may be
appropriately set such that the porosities, the pore sizes, and the average hole sizes of the first porous metal body 1a and the second porous metal body 1b after the pressing become within predetermined ranges, and precursors that satisfy the above-described condition may be selected. According to the present embodiment, the chemical properties and the physical properties of each of the precursors are hardly changed and, therefore, a predetermined composite material can be produced by a very simple method as described above.

The holes of the first porous metal precursor P1a and the second porous metal precursor P1b may be filled with the above-described various substances. The substances introduced into the precursors may be the same or different from each other. For example, in the case where holes are filled with substances different from each other before bonding, the composite material 10 can be provided with various functions. The precursors are bonded by a very simple method, that is, only performing pressing, and as a result, the functions of the substances introduced are not easily impaired.

### (Second step)

In the second step, the first porous metal precursor P1a and the second porous metal precursor P1b are arranged such that the two at least overlap one another. The arrangement method is not specifically limited and the arrangement may be performed such that the composite material 10 has a structure shown in Fig. 1, Figs. 4A to 4C, or has a configuration in which these structures are combined. Bonding is caused in the overlap portion between the first porous metal precursor P1a and the second porous metal precursor P1b by pressing, which is performed later, so as to form the bonding portion 2.

### (Third step)

In the third step, at least the above-described overlap portion is pressed. Consequently, the metal skeleton (fiber portion 102) of the overlap portion of at least one precursor is plastically deformed and, as a result, the porous metal bodies are firmly bonded to each other. It is not necessary that the skeletons of both the precursors be plastically deformed. Part of the skeleton of one precursor may be plastically deformed so as to enter the opening 103 of the other. Alternatively, parts of skeletons of both the precursors may be plastically deformed and become entangled while engaging with each other. Each of the porous metal bodies has a three-dimensional mesh-like skeleton and, therefore, is plastically deformed and has appropriate elasticity. As a result, the porous metal body is not easily damaged even when pressing is performed.

In the case where the porous metal bodies are formed of a sintered body of a metal powder, it is difficult to bond the two by pressing. This is because the sintered body is not easily plastically deformed and may be broken due to pressing.

There is no particular limitation regarding the pressing method, and examples thereof include roll press and flat press.
Pressing may be performed under heating. In particular, it is preferable that bonding be performed by roll press at ambient temperature from the viewpoint of cost and production efficiency. The press pressure is not specifically limited and may be appropriately set in consideration of the easiness of plastic deformation of the precursors. The press pressure may be, for example, 10 kPa or more, or 100 kPa or more. Meanwhile, the press pressure may be 4,000 kPa or less, or 5,000 kPa or less.

### Industrial Applicability

The composite material according to the present invention has excellent permeability of a fluid and, therefore, is suitable for, for example, carriers of various chemical substances, various filters, and gas channels of fuel cells. Also, the composite material is expected to become multifunctional and, therefore, can be applied to various uses including a porous metal body.

### Reference Signs List

1a: first porous metal body, 1b: second porous metal body, 1c: third porous metal body, 1d: fourth porous metal body, 2, 2aa, 2ac, 2ad, 2bc, 2bd: bonding portion, 10, 10A to 10C: composite material, 101: hole, 102: skeleton, 102a: hollow portion, 103: opening

## Claims

1. A composite material (10, 10A, 10B, 10C) comprising:
a first porous metal body (1a) having a three-dimensional mesh-like skeleton (102);
a second porous metal body (1b) having a three-dimensional mesh-like skeleton (102); and
a bonding portion (2, 2aa, 2ac, 2ad, 2bc, 2bd) in which the skeletons (102) of the first porous metal body (1a) and the second porous metal body (1b) are entangled with each other and, thereby, the first porous metal body (1a) is bonded to the second porous metal body (1b),
wherein:
the first porous metal body (1a) and the second porous metal body (1b) are composed of a plurality of cells having a hole (101) and a metal skeleton (102);
one of the cells is expressed as a regular dodecahedron;
the cell has a connection of the fiber portions, the fiber portion constituted of a fibrous or rod-like metal portion;
the cell includes substantially pentagonal openings (103) surrounded by the fiber portions;
the adjacent cells are communicated with each other by sharing one opening (103);
the fiber portions form a mesh-like network while demarcating a plurality of holes (101) continued;
the metal constituting the first porous metal body (1a) and the second porous metal body (1b) includes at least one of copper, a copper alloy, nickel, a nickel alloy, aluminium, an aluminium alloy, and a stainless steel;
the porosity of the composite material (10, 10A, 10B, 10C) is 60 percent by volume or more and 99 percent by volume or less;
the average hole size of the first porous metal body (1a) and the second porous metal body (1b) is 300 µm to 5000 µm;
the pore size of the first porous metal body (1a) and the second porous metal body (1b) is 100 µm to 3000 µm;

2. The composite material (10, 10A, 10B, 10C) according to Claim 1, wherein the porosity of the first porous metal body (1a) is different from the porosity of the second porous metal body (1b).

3. The composite material (10, 10A, 10B, 10C) according to Claim 1 or Claim 2, wherein the first porous metal body (1a) contains a metal different from a metal contained in the second porous metal body (1b).

4. A method for producing a composite material (10, 10A, 10B, 10C), in which a first porous metal body (1a) having a three-dimensional mesh-like skeleton (102) is bonded to a second porous metal body (1b) having a three-dimensional mesh-like skeleton (102), wherein:
the first porous metal body (1a) and the second porous metal body (1b) are composed of a plurality of cells having a hole (101) and a metal skeleton (102);
one of the cells is expressed as a regular dodecahedron;
the cell has a connection of the fiber portions, the fiber portion constituted of a fibrous or rod-like metal portion;
the cell includes substantially pentagonal openings (103) surrounded by the fiber portions;
the adjacent cells are communicated with each other by sharing one opening (103);
the fiber portions form a mesh-like network while demarcating a plurality of holes (101) continued;
the metal constituting the first porous metal body (1a) and the second porous metal body (1b) includes at least one of copper, a copper alloy, nickel, a nickel alloy, aluminium, an aluminium alloy, and a stainless steel;
the porosity of the composite material (10, 10A, 10B, 10C) is 60 percent by volume or more and 99 percent by volume or less;
the average hole size of the first porous metal body (1a) and the second porous metal body (1b) is 300 µm to 5000 µm;
the pore size of the first porous metal body (1a) and the second porous metal body (1b) is 100 µm to 3000 µm,
the method comprising the steps of:
preparing a first porous metal precursor of the first porous metal body (1a) and a second porous metal precursor of the second porous metal body (1b) in a first step, the first step including covering a resin porous body with a metal, and removing the resin porous body by heat treatment;
arranging the first porous metal and the second porous metal such that the first porous metal and the second porous metal at least overlap one another in a second step; and
pressing an overlap portion between the first porous metal and the second porous metal in a third step.

## Patentansprüche

1. Verbundwerkstoff (10, 10A, 10B, 10C), umfassend:
einen ersten porösen Metallkörper (1a) mit einem dreidimensionalen maschenartigen Gerüst (102);
einen zweiten porösen Metallkörper (1b) mit einem dreidimensionalen maschenartigen Gerüst (102); und
einen Verbindungsabschnitt (2, 2aa, 2ac, 2ad, 2bc, 2bd), in dem die Gerüste (102) des ersten porösen Körpers (1a) und des zweiten porösen Körpers (1b) miteinander verflochten sind und dadurch das erste poröse Metall (1a) mit dem zweiten porösen Metallkörper (1b) verbunden ist,
wobei:
der erste poröse Metallkörper (1a) und der zweite poröse Metallkörper (1b) aus einer Vielzahl von Zellen mit einem Loch (101) und einem Metallskelett (102) zusammengesetzt sind;
eine der Zellen als regelmäßiges Dedekaeder ausgebildet ist;
die Zelle eine Verbindung der Faserabschnitte aufweist, wobei der Faserabschnitt aus einem faserigen oder stabförmigen Metallabschnitt besteht;
die Zelle im Wesentlichen fünfeckige Öffnungen (103) umfasst, die von den Faserabschnitten umgeben sind;
die benachbarten Zellen miteinander verbunden sind, indem sie sich eine Öffnung (103) teilen;
die Faserabschnitte ein maschenartiges Netzwerk bilden und dabei eine Vielzahl von Löchern (101) abgrenzen;
das Metall, das den ersten porösen Metallkörper (1a) und den zweiten porösen Metallkörper (1b) bildet, mindestens eines von Kupfer, einer Kupferlegierung, Nickel, einer Nickellegierung, Aluminium, einer Aluminiumlegierung und rostfreiem Stahl umfasst;
die Porosität des Verbundmaterials (10, 10A, 10B, 10C) 60 Vol.-% oder mehr und 99 Vol.- U % oder weniger beträgt;
die durchschnittliche Lochgröße des ersten porösen Metallkörpers (1a) und des zweiten porösen Metallkörpers (1b) 300 µm bis 5000 µm beträgt;
die Porengröße des ersten Metallkörpers (1a) und des zweiten porösen Metallkörpers (1b) 100 µm bis 3000 µm beträgt.

2. Verbundwerkstoff (10, 10A, 10B, 10C) nach Anspruch 1, wobei die Porosität des ersten porösen Metallkörpers (1a) von der Porosität des zweiten porösen Metallkörpers (1b) verschieden ist.

3. Verbundmaterial (10, 10A, 10B, 10C) nach Anspruch 1 oder Anspruch 2, wobei der erste poröse Metallkörper (1a) ein Metall enthält, das sich von einem im zweiten porösen Metallkörper (1b) enthaltenen Metall unterscheidet.

4. Verfahren zur Herstellung eines Verbundmaterials (10, 10A, 10B, 10C), bei dem ein erster poröser Metallkörper (1a) mit einem dreidimensionalen netzartigen Gerüst (102) mit einem zweiten porösen Metallkörper (1b) mit einem dreidimensionalen netzartigen Gerüst (102) verbunden wird, wobei
der erste poröse Metallkörper (1a) und der zweite poröse Metallkörper (1b) aus einer Vielzahl von Zellen mit einem Loch (101) und einem Metallskelett (102) zusammengesetzt sind;
eine der Zellen als regelmäßiges Dedekaeder ausgebildet ist;
die Zelle eine Verbindung der Faserabschnitte aufweist, wobei der Faserabschnitt aus einem faserigen oder stabförmigen Metallabschnitt besteht;
die Zelleenthält im Wesentlichen fünfeckige Öffnungen (103) umfasst, die von dem Faserabschnitt umgeben sind;
die benachbarten Zellen miteinander verbunden sind, indem sie sich eine Öffnung (103) teilen;
die Faserabschnitte ein maschenartiges Netzwerk bilden und dabei eine Vielzahl von Löchern (101) abgrenzen;
das Metall, das den ersten porösen Metallkörper (1a) und den zweiten porösen Metallkörper (1b) bildet, mindestens eines von Kupfer, einer Kupferlegierung, Nickel, einer Nickellegierung, Aluminium, einer Aluminiumlegierung und rostfreiem Stahl umfasst;
die Porosität des Verbundmaterials (10, 10A, 10B, 10C) 60 Vol.-% oder mehr und 99 Vol.-% oder weniger beträgt;
die durchschnittliche Lochgröße des ersten porösen Metallkörpers (1a) und des zweiten porösen Metallkörpers (1b) 300 µm bis 5000 µm beträgt;
die Porengröße des ersten Metallkörpers (1a) und des zweiten porösen Metallkörpers (1b) beträgt 100 µm bis 3000 µm,
wobei das Verfahren die folgenden Schritte umfasst:
Herstellen eines ersten porösen Metallvorläufers des ersten porösen Metallkörpers (1a) und eines zweiten porösen Metallvorläufers des zweiten porösen Metallkörpers (1b) in einem ersten Schritt; wobei der erste Schritt das Bedecken eines porösen Harzkörpers mit Metall und das Entfernen des porösen Harzkörpers durch Wärmebehandlung umfasst;
Anordnen des ersten porösen Metalls und des zweiten porösen Metalls derart, dass das erste poröse Metall und das zweite poröse Metall einander in einem zweiten Schritt zumindest überlappen; und
Pressen eines Überlappungsabschnitts zwischen dem ersten porösen Metall und dem zweiten porösen Metall in einem dritten Schritt.

## Revendications

1. Matériau composite (10, 10A, 10B, 10C) comprenant :
un premier corps en métal poreux (1a) ayant un squelette en forme de maillage tridimensionnel (102) ;
un second corps en métal poreux (1b) ayant un squelette en forme de maillage tridimensionnel (102) ; et
une portion de liaison (2, 2aa, 2ac, 2ad, 2bc, 2bd) dans laquelle les squelettes (102) du premier corps en métal poreux (1a) et du second corps en métal poreux (1b) sont entremêlés l'un avec l'autre et, par-là, le premier corps en métal poreux (1a) est lié au second corps en métal poreux (1b),
dans lequel :
le premier corps en métal poreux (1a) et le second corps en métal poreux (1b) sont constitués de plusieurs cellules ayant une perforation (101) et un squelette en métal (102) ;
une des cellules est exprimée comme un dodécaèdre régulier ;
la cellule présente une connexion des portions de fibres, la portion de fibres constituée d'une portion fibreuse ou en métal en forme de barre ;
la cellule inclut des ouvertures sensiblement pentagonales (103) entourées par les portions de fibres ;
les cellules adjacentes communiquent les unes avec les autres en partageant une ouverture (103) ;
les portions de fibres forment un réseau en forme de maillage tout en démarquant plusieurs perforations (101) continues ;
le métal constituant le premier corps en métal poreux (1a) et le second corps en métal poreux (1b) inclut au moins un de cuivre, un alliage de cuivre, nickel, un alliage de nickel, aluminium, un alliage d'aluminium, et un acier inoxydable ;
la porosité du matériau composite (10, 10A, 10B, 10C) est de 60 pourcent en volume ou supérieure et de 99 pourcent en volume ou inférieure ;
la taille moyenne de perforation du premier corps en métal poreux (1a) et du second corps en métal poreux (1b) est de 300 µm à 5 000 µm ;
la taille de pore du premier corps en métal poreux (1a) et du second corps en métal poreux (1b) est de 100 µm à 3 000 µm.

2. Matériau composite (10, 10A, 10B, 10C) selon la revendication 1, dans lequel la porosité du premier corps en métal poreux (1a) est différente de la porosité du second corps en métal poreux (1b).

3. Matériau composite (10, 10A, 10B, 10C) selon la revendication 1 ou revendication 2, dans lequel le premier corps en métal poreux (1a) contient un métal différent d'un métal contenu dans le second corps en métal poreux (1b).

4. Procédé de production d'un matériau composite (10, 10A, 10B, 10C), dans lequel un premier corps en métal poreux (1a) ayant un squelette en forme de maillage tridimensionnel (102) est lié à un second corps en métal poreux (1b) ayant un squelette en forme de maillage tridimensionnel (102), dans lequel :
le premier corps en métal poreux (1a) et le second corps en métal poreux (1b) sont constitués de plusieurs cellules ayant une perforation (101) et un squelette en métal (102) ;
une des cellules est exprimée comme un dodécaèdre régulier ;
la cellule présente une connexion des portions de fibres, la portion de fibres constituée d'une portion fibreuse ou en métal en forme de barre ;
la cellule inclut des ouvertures sensiblement pentagonales (103) entourées par les portions de fibres ;
les cellules adjacentes communiquent les unes avec les autres en partageant une ouverture (103) ;
les portions de fibres forment un réseau en forme de maillage tout en démarquant plusieurs perforations (101) continues ;
le métal constituant le premier corps en métal poreux (1a) et le second corps en métal poreux (1b) inclut au moins un de cuivre, un alliage de cuivre, nickel, un alliage de nickel, aluminium, un alliage d'aluminium, et un acier inoxydable ;
la porosité du matériau composite (10, 10A, 10B, 10C) est de 60 pourcent en volume ou supérieure et 99 pourcent en volume ou inférieure ;
la taille moyenne de perforation du premier corps en métal poreux (1a) et du second corps en métal poreux (1b) est de 300 µm à 5 000 µm ;
la taille de pore du premier corps en métal poreux (1a) et du second corps en métal poreux (1b) est de 100 µm à 3 000 µm,
le procédé comprenant les étapes de :
préparation d'un premier précurseur de métal poreux du premier corps en métal poreux (1a) et d'un second précurseur de métal poreux du second corps en métal poreux (1b) dans une première étape, la première étape incluant la couverture d'un corps poreux en résine avec un métal, et l'élimination du corps poreux en résine par traitement thermique ;
disposition du premier métal poreux et du second métal poreux de sorte que le premier métal poreux et le second métal poreux se chevauchent au moins l'un l'autre dans une seconde étape ; et de
pressage d'une portion de chevauchement entre le premier métal poreux et le second métal poreux dans une troisième étape.
